(19) **Europäisches Patentamt / European Patent Office / Office européen des brevets**

(11) **EP 4 430 435 B1**

(12) # EUROPEAN PATENT SPECIFICATION

(45) Date of publication and mention of the grant of the patent:
**22.04.2026 Bulletin 2026/17**

(21) Application number: **22893664.7**

(22) Date of filing: **11.11.2022**

(51) International Patent Classification (IPC):
**G01V 1/28** (2006.01)    **G01V 1/40** (2006.01)
**G01V 1/30** (2006.01)

(52) Cooperative Patent Classification (CPC):
**G01V 1/288; G01V 1/40;** G01V 2210/1234;
G01V 2210/646; G01V 2210/65

(86) International application number:
**PCT/US2022/049698**

(87) International publication number:
**WO 2023/086566 (19.05.2023 Gazette 2023/20)**

(54) **LINEAR INVERSION OF MICROSEISMIC EVENT LOCATION USING SEISMIC DATA IMAGE FILE ATTRIBUTES**

LINEARE INVERSION EINER MIKROSEISSMISCHEN EREIGNISPOSITION UNTER VERWENDUNG VON ATTRIBUTEN EINER SEISMISCHEN DATENBILDDATEI

INVERSION LINÉAIRE D'EMPLACEMENT D'ÉVÉNEMENT MICROSISMIQUE À L'AIDE D'ATTRIBUTS DE FICHIER D'IMAGE DE DONNÉES SISMIQUES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **11.11.2021 US 202163278383 P**

(43) Date of publication of application:
**18.09.2024 Bulletin 2024/38**

(73) Proprietors:
• **Services Pétroliers Schlumberger**
**75007 Paris (FR)**
Designated Contracting States:
**FR**
• **Schlumberger Technology B.V.**
**2514 JG The Hague (NL)**
Designated Contracting States:
**AL AT BE BG CH CY CZ DE DK EE ES FI GB GR HR HU IE IS IT LI LT LU LV MC ME MK MT NL NO PL PT RO RS SE SI SK SM TR**

(72) Inventors:
• **MIZUNO, Takashi**
**Sugar Land, Texas 77478 (US)**
• **BETTINELLI, Pierre**
**011141 Bucharest (RO)**

• **LE CALVEZ, Joel Herve**
**Sugar Land, Texas 77478 (US)**
• **NUHN, Zachary**
**Houston, Texas 77077 (US)**
• **FUNDYTUS, Nicholas**
**Nisku, Alberta T5T 6N7 (CA)**

(74) Representative: **Schlumberger Intellectual Property Department**
**Parkstraat 83**
**2514 JG Den Haag (NL)**

(56) References cited:
**CN-A- 112 462 419**      **US-A1- 2009 259 406**
**US-A1- 2015 006 124**      **US-A1- 2015 081 223**
**US-A1- 2015 185 344**      **US-A1- 2017 371 051**
**US-B1- 9 945 970**

• **LIANG MINGXING ET AL: "Tectonic stress estimation from ultrasonic borehole image logs in a coal bed methane well, northeastern Qinshui Basin, China", JOURNAL OF NATURAL GAS SCIENCE AND ENGINEERING, ELSEVIER, AMSTERDAM, NL, vol. 52, 31 January 2018 (2018-01-31), pages 44 - 58, XP085367776, ISSN: 1875-5100, DOI: 10.1016/J.JNGSE.2018.01.021**

**Description**

**CROSS-REFERENCE TO RELATED APPLICATIONS**

This application claims the benefit of U.S. Provisional Application No. 63/278383, entitled "Linear Inversion of Micro-Seismic Event Location Using Seismic Data Image File Attributes," filed November 11, 2021.

**FIELD**

This disclosure generally relates to the detection of microseismic events within subterranean formations. More particularly, this disclosure relates to linear inversion of microseismic event location using seismic data image file attributes.

**BACKGROUND**

Historically microseismic event location within subterranean formations has been done by time picking for each seismic receiver placed in the field or energy scanning for seismic data acquired at each receiver in the seismic data domain. The microseismic event location inversion problem has been formulated in 3D or 2D space due to its nature. Typically, the relation between time pick and event location is given by:

$$T = \int_{\Delta} ds + T_O \qquad \text{(Eq. 1),}$$

where T is the arrival time of a seismic wave (P or S), s is slowness (inverse of formation velocity) along the propagation path from event location to receiver, delta ($\Delta$) is the distance of the event from the receiver (event location) measured along the propagation path, and $T_o$ is origin time of the event. To solve the event location, the origin time can be inverted using a known velocity model. Further, the dataset can be time picked, and P and S waves labeled properly since slowness for P and S waves are different. In the production monitoring application, formation velocity is typically unavailable, and labeled time picks are often difficult to obtain. Even if formation velocity information is available, receivers must be evenly distributed in 3D space for appropriate accuracy, which is not possible for single well monitoring. The same is true for a 2D problem for single well monitoring as at least the velocity model will be unavailable.

Optical fiber distributed acoustic sensing (DAS) is triggering innovations in a wide area of subsurface sensing. In production monitoring (oil/gas/geothermal), people are interested in reservoir deformation monitoring related to stimulation, injection, and/or extraction through strain and microseismic data analysis of optical fiber data. However, microseismic processing of those data is challenging because of the larger data volume (on the order of 2 - 4 times larger as compared to conventional methods), and relatively low signal to noise ratios (SNR). Those characteristics push current processing techniques far beyond their limits. CN 112 462 419 A discloses a method for detecting microseismic events using edge detection.

There is a desire, therefore, for processes and systems that can determine the existence of and the estimated location for microseismic events within subterranean formations without knowledge of a velocity model.

**SUMMARY**

A process for estimating a location of one or more microseismic events within a subterranean formation is disclosed according to claim 1. A system for estimating a location of one or more microseismic events within a subterranean formation is disclosed according to claim 8. Advantageous embodiments are disclosed in the dependent claims.

**BRIEF DESCRIPTION OF THE DRAWINGS**

The subject disclosure is further described in the detailed description which follows, in reference to the noted plurality of drawings by way of non-limiting examples of the subject disclosure, in which like reference numerals represent similar parts throughout the several views of the drawings.

FIG. 1 depicts an illustrative process for determining the existence of and estimating the location for one or more microseismic events within a subterranean formation, according to the claimed subject-matter.
FIG. 2 depicts an illustrative diagram of a well site that includes a dense seismic receiver array disposed within a subterranean formation, according to one or more embodiments described.
FIG. 3 depicts an illustrative diagram of a dense seismic receiver array within a wellbore and a seismic wave propagation from a microseismic event, according to one or more embodiments described.
FIG. 4 graphically depicts illustrative model curve plots of image domain data at varying $r_e$ values about varying depths along a model dense seismic receiver array, according to one or more embodiments described.
FIG. 5 graphically depicts a performance of estimations of a zero-crossing point of a slowness variation curve, according to one or more embodiments described.
FIG. 6 graphically depicts another example in a case where a dataset contains both P and S wave slowness estimates, according to one or more embodiments described.
FIG. 7 depicts a schematic of an illustrative computing system for estimating a subterranean depth, a time, and a distance of one or more microseismic events within a subterranean formation relative to a location along a dense seismic receiver array, according to one or more embodiments described.

FIG. 8 depicts an illustrative computing device that includes a microseismic events controller and a non-transitory computer-readable medium that includes computer executable instructions stored thereon within the computing system shown in FIG. 7, according to one or more embodiments described.

## DETAILED DESCRIPTION

The particulars shown herein are by way of example and for purposes of illustrative discussion of the examples of the subject disclosure only and can provide what might be the most useful and readily understood description of the principles and conceptual aspects of the subject disclosure. In this regard, no attempt is made to show every structural detail, the description taken with the drawings making apparent to those skilled in the art how the several forms of the subject disclosure can be embodied in practice.

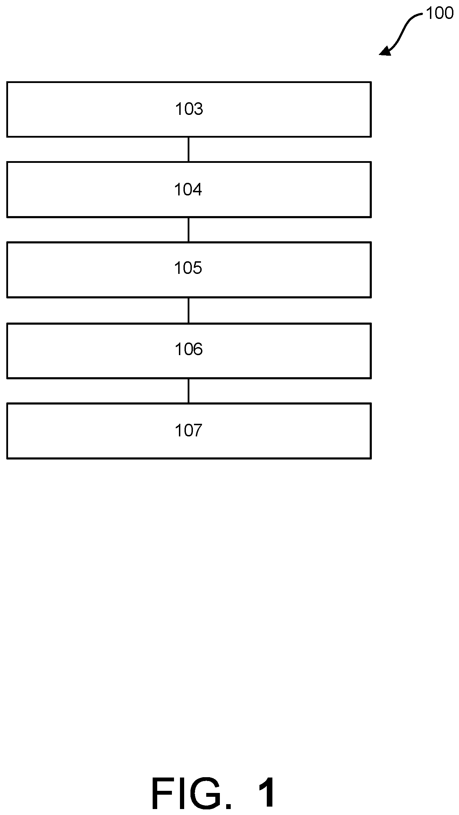

FIG. 1 depicts an illustrative process 100 for determining the existence of and estimating the location for one or more microseismic events within a subterranean formation, according to the claimed subject-matter. The process 100 includes acquiring seismic data with a dense seismic receiver array disposed within the subterranean formation, on the surface above the subterranean formation, or a combination thereof (Block 103); converting the seismic data into an image domain dataset (Block 104); detecting within the image domain dataset one or more seismic waveform edges (Block 105); characterizing within the image domain dataset one or more linear segments, where each of the one or more linear segments define a portion of an edge of the one or more of the seismic waveform edges as a function of seismic arrival time and subterranean depth (Block 106); and estimating the subterranean depth of the one or more microseismic events based on the one or more linear segments (Block 107). Herein, "subterranean depth" is used to mean either a measured depth, which is a distance measured along the path of a wellbore, or a true vertical depth, which is the absolute vertical distance from the surface. Further herein, "times" are typically relative and not meant to measure an exact time between the occurrence of a microseismic event and detection of that microseismic event.

In one or more embodiments, the process 100 may further include disposing the dense seismic receiver array along or within a wireline cable or any other downhole system that may include a dense seismic receiver array. In other embodiments, the process 100 may further include forming a casing within a wellbore and deploying the dense seismic receiver array behind or within a casing formed within the wellbore. In further embodiments, the process 100 may further include deploying a tubing within the wellbore, where the dense seismic receiver array is disposed behind or within the tubing. Additionally, in one or more embodiments, the process 100 may further include increasing or decreasing a pressure within a well during production operations based on the estimated subterranean depth of the one or more microseismic events.

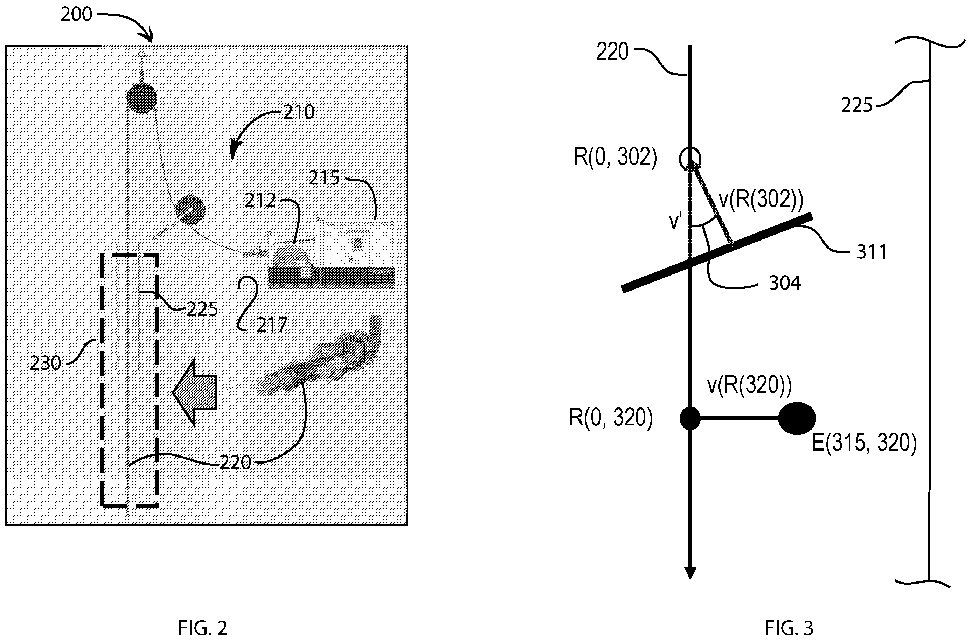

FIG. 2 depicts an illustrative diagram of a well site 210 that includes a dense seismic receiver array 220 disposed within a subterranean formation 230, according to one or more embodiments. Microseismic events that occur within the subterranean formation 230 are detected or otherwise acquired by the dense seismic receiver array 220. Data acquired by the dense seismic receiver array 220 related to one or more microseismic events is used to estimate a subterranean depth of the one or more microseismic events. The dense seismic receiver array 220 can be operated from a control center 215 that can include appropriate electronics through which seismic data can be stored, analyzed, and/or manipulated. The dense seismic receiver array 220 can be disposed along a surface 217 and/or at least partially within the wellbore 225. The dense seismic receiver array 220 can be disposed via a wireline apparatus 212 or can be disposed via a slick line, coil tubing, or other delivery system capable of disposing the dense seismic receiver array 220 on the surface 217 and/or at least partially within the subterranean formation 230. In some embodiments, the dense seismic receiver array 220 can include an optical fiber. The optical fiber that can be disposed on the surface 217 and/or at least partially within the subterranean formation 230 and/or the wellbore 225. The optical fiber can operate as a dense distributed seismometer array at intervals along the optical fiber length and can acquire continuous vibration data along its length in real-time. The dense seismic receiver array 220 can also include either separately or in combination geophones, hydrophones, and/or micro-electro-mechanical systems (MEMS). In some embodiments, the wellbore 225 can be a production well, a monitoring well, an abandoned well, a water well, a carbon capture well, a geothermal well, an underground gas storage well, or any subsurface void. In some embodiments, seismic data can be acquired during a treatment process, such as the pressurization of a production well, or can be acquired after treatment has stopped, such as after pumping has stopped during a well fracturing process.

Referring to FIG. 1 and FIG. 2, the dense seismic receiver array 220 aquires seismic data (Block 103) via the dense seismic receiver array 220. The seismic data can include data associated with the subterranean depth and time of the one or more microseismic events within the subterranean formation 230 with respect to the dense seismic receiver array 220. After or during acquisition of the seismic data, the seismic data can be is converted into an image domain dataset (Block 104) and one or more image files can be generated. In one or more embodiments, to convert the acquired seismic data into the one or more image files the data can be converted such that one axis can be time (t) and one axis can be subterranean depth (z) while the amplitude of a waveform d(x, t) can be represented by a density of data points in the image data, which can be represented by variations in grayscale or color if the image file were to be displayed. In some embodiments, the resolution of the data from the acquired seismic data can be changed such that the image domain dataset can be displayed on a display screen without losing any seismic features from the seismic data. The conversion can be performed at the well site 210 or at another location. The one or more image files are processed to determine the existence of and to estimate the subterranean depth of one or more microseismic events within the subterranean formation 230. In some embodiments, the one or more image files can be denoised and enhanced. In one or more embodiments, a Gaussian denoising algorithm may be employed to denoise and enhance the data displayed in the one or more image files. Other denoising algorithms and techniques may be used. Further, edge detection can be performed to detect one or more seismic waveform edges (Block 105). Edge detection can detect amplitude changes within the image data. Many edge detection technologies exist, but in general edge detection can include detecting one or more linear segments which each define a portion of one or more of the one or more seismic waveform edges. Thus, edge detection can be used to obtain arrivals of microseismic signal at the dense seismic receiver array 220 in the image data, e.g., subterranean depth and slope as a function of arrival time and subterranean depth, in the image domain. In one or more embodiments, edge detection within the image domain dataset can be performed using Sobel, Canny, Robinson, Kirsh, Marr-Hildreth, and Roberts edge detection techniques/algorithms. Other edge detection techniques/algorithms can also be used. According to the claimed subject-matter the one or more linear segments are characterized within the image domain, where each of the one or more linear segments define a portion of an edge of the one or more of the seismic waveform edges as a function of seismic arrival time and subterranean depth The attributes of one or more linear segments within the image domain dataset can be used to estimate the microseismic event subterranean depth. In one or more embodiments, the subterranean depth with respect to a subterranean depth of the dense seismic receiver array 220, which is recorded while the dense seismic receiver array 220 is run into the wellbore from the surface 217, may be determined, which allows for estimation of the subterranean depth of the microseismic event relative to the surface of the borehole.

In one or more embodiments, edge enhancement processing can be performed to enhance seismic wave arrivals in the image domain dataset. The edge enhanced seismic data can be analyzed to characterize one or more continuous structures such as parabolas and/or other higher order features. In some embodiments, a one-dimension (1D) Hough transform can be utilized to characterize the one or more linear segments. The linear segments information in the seismic image can correspond to an apparent slowness of the seismic data. In some embodiments, a slope of a linear segment can be used to estimate a subterranean depth of the microseismic event. Thus, as discussed further below, the apparent slowness of seismic wave arrivals can be computed to detect within the image domain dataset the one or more seismic arrival times of an edge of the one or more seismic waveform edges at a subterranean depth relative to the subterranean depth of the dense seismic receiver array (Block 106). In some embodiments filters can be applied to the edge detected signal or the Hough transform domain signal for further regularization. Further, in one or more embodiments, the 1D Hough transform can be performed to determine non-seismic features within the image domain dataset and to trim the non-seismic features from the image domain dataset.

FIG. 3 depicts an illustrative diagram of the dense seismic receiver array 220 within the wellbore 225, according to one or more embodiments. To determine the subterranean depth of the one or more microseismic events as a function of the subterranean depth of the dense seismic receiver array 220 it can be assumed that the wellbore 225 is approximated as straight at the subterranean depth where a microseismic event can occur and it can be assumed the velocity model is constant around the wellbore 225 at that subterranean depth. In FIG. 3, by way of example, the apparent velocity of a seismic wave 311, incident to the receiver point R(0, z) or R(0, 302) (which can be estimated by subterranean depth and slope of linear segment information of the image domain dataset image) can be expressed with the following equation:

$$v' = \frac{v}{\cos\theta} \qquad (0.1)$$

where v' is the apparent velocity at the location R(0, 302), v is the velocity of the seismic wave 311), θ or angle 304, is the incident angle of the seismic wave measured from the wellbore 225 axis. The edge detection and linear segment detection described above can measure the angle 304 of the linear segments in the seismic data, which is the local apparent slowness, s'. Equation 1.1 can be rewritten in the following form:

$$s' = s\cos\theta \qquad (0.2)$$

Where s is the measured slowness and the angle 304 is the incident angle of the wave relative to the wellbore 225. As seen in FIG. 3, θ approaches 90 degrees if a receiver within the dense seismic receiver array 220 is closest to the event location in the wellbore 225. Therefore, at the point of the event location in the well $z_e$ or 320, slowness or s' equals zero (0). Given this feature, the wave type (P or S wave) can be ignored, and the given slowness is assumed to be about 0 at the subterranean depth of the event location in the well $z_e$ or 320. In other words, in one or more embodiments, P and S waves are treated the same (*i.e.,* are not differentiated within the image domain dataset) in characterizing one or more linear segments and estimating the subterranean depth of the microseismic event.

The above calculations infer slowness in the image domain but do not infer $\theta$ for the 2D case. For a single dimension or 1D measurement case, equation 1.2 can be re-expressed in terms of $\theta$, to arrive at the following equation.

$$\cos\theta = \frac{(z - z_e)}{\left|\vec{R} - \vec{E}\right|} \qquad (1.3)$$

Therefore equation (1.2) can be estimated by the following:

$$s' = s\frac{(z - z_e)}{\left|\vec{R} - \vec{E}\right|} \qquad (1.4)$$

Equation 1.4 can be utilized to estimate the subterranean depth of the one or more microseismic events within a subterranean formation relative to the subterranean depth of the dense seismic receiver array 220 as a function of a subterranean depth within the image domain dataset (Block 107). For example the microseismic event at location $E(r_e, z_e)$ or E(315, 320) in FIG. 3, a distance ($r_e$ or 315 in this present example) from the dense seismic receiver array 220, for example location $R(0, z_e)$ or R(0, 320) as depicted in FIG. 3. Further, in one or more embodiments, where the formation velocity is known, the time of the microseismic event can also be estimated from the image domain dataset based on the arrival times of the linear segments of the one or more seismic waveform edges. Accordingly, if the formation velocity is known, then the location of the microseismic event may be estimated from the image domain dataset.

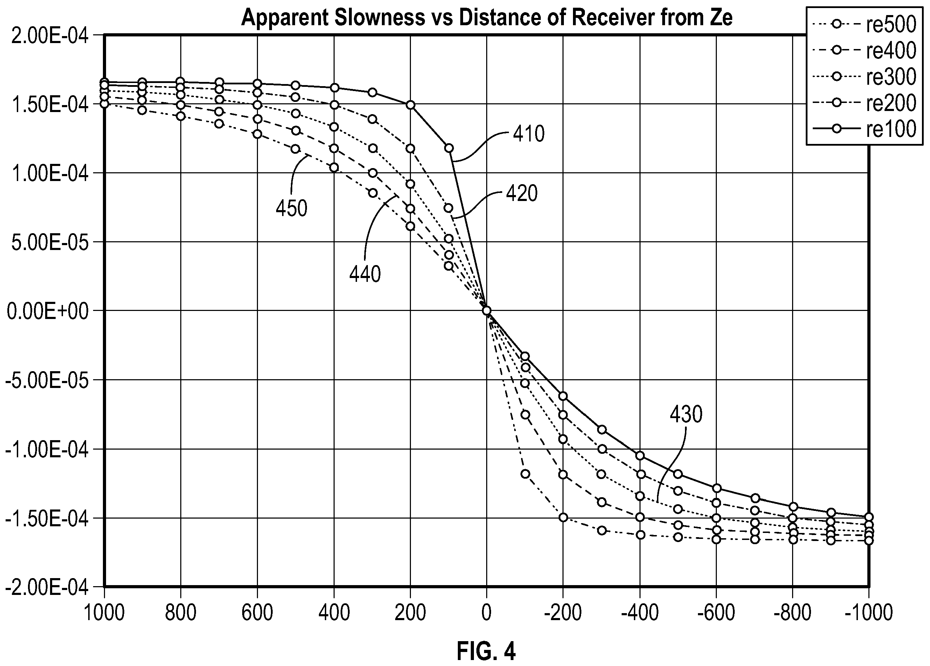

FIG. 4 graphically depicts illustrative model curve plots of image domain data at varying $r_e$ values about varying depths along a model dense seismic receiver array 220, according to one or more embodiments. The plots 410, 420, 430, 440, and 450, which correspond to re100, re200, re300, re400, and re500, respectively, show the apparent slowness (vertical axis in seconds) and distance variation along with receiver position (horizontal axis in meters) in a model wellbore. Here, there is a zero-crossing at $z = z_e$. Accordingly, an inversion of the location of the microseismic event can be performed in terms of the wellbore axis coordinate ($z_e$) and can be implemented as a zero-crossing point inversion problem of slowness variation in the wellbore axis coordinate system. The event location is at $z = 0$, although the shape of the curve is changed by the distance of the event from the well ($r_e$), the trend curves show zero-crossing at $z = 0$, where the event is located. The problem can be assumed to be a linear problem where solutions to a linear and/or polynomial equation can be found that can represent a data fit to find the zero-crossing point where $z = z_e$.

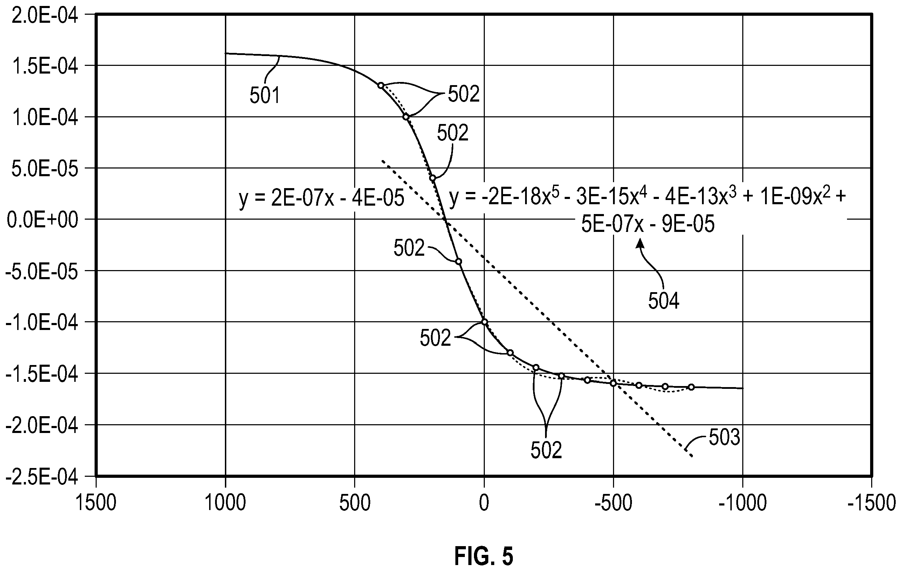

FIG. 5 graphically depicts a performance of estimations of a zero-crossing point, according to one or more embodiments. In this graph, the seismic wavefield contains a single phase of data. The data point of slowness is randomly selected from a depth range between -1,000 m to 1,000 m in the well coordinate. Apparent slowness (vertical axis in seconds) is shown with varying receiver position (horizontal axis in meters) in a well in an illustrative case where a microseismic event is located at ze = 150 m, re = 200 m, and velocity is 6000 m/s. Curve 501 is the model curve for points 502. A linear regression was employed to solve for the linear solution, line 503, and a 5th order polynomial 504 was determined to fit points 502. The zero-crossing of line 503 and the 5th order polynomial curve that fits to points 502 are comparable to curve 501. The zero-crossing point for the line 503 and the 5th order polynomial curve that fits to points 502 are comparable to the zero-crossing of the synthetic model curve (equation 1.4) as shown in FIG. 4. This example shows that $z_e$ can be estimated by solving a zero-crossing problem for the data.

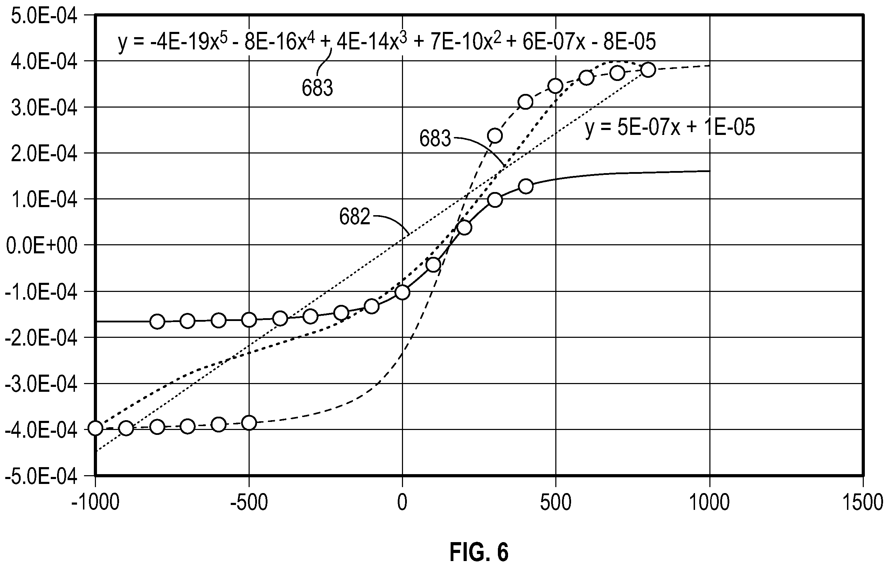

FIG. 6 graphically depicts another example in a case where a dataset contains both P and S wave slowness estimates, according to one or more embodiments. Here, the event location as FIG. 5 is utilized where ze = 150 m, re =200 m, and v = 6000 m/s and 2500 m/s. Since the data contains both P and S waves, there are two model curves. A linear regression problem for P and S wave slowness measurements was solved for the linear line 682 and the 5th order polynomial curve 683 was also solved. In the graph, the zero-crossing of the linear line 682 is about 150 meters away from the true zero-crossing point. However, the zero-crossing point of the 5th order polynomial curve 683 is comparable to the true zero-crossing. Here, microseismic event locations are estimated in terms of well coordinates using slowness attributes for P and S waves inferred from the seismic data image.

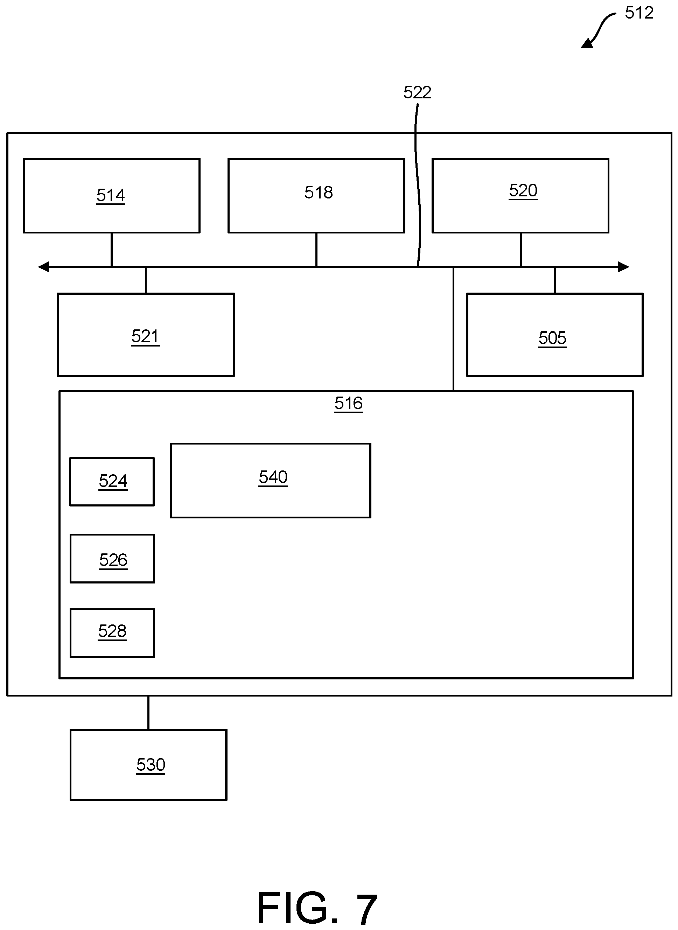

FIG. 7 depicts a schematic of an illustrative computing system 512 for estimating a subterranean depth of one or more microseismic events within a subterranean formation, according to one or more embodiments. One or more chips, for example chips 505 and/or 521, can be or can include field-programmable gate arrays ("FPGAs"), application specific integrated circuits ("ASICs"), chiplets, Multi-Chip-Modules, central processing units ("CPUs"), and/or system-on-chips ("SOCs"), to name a few. The chip can be used in a wide-range of applications, including but not limited to auto emission control, environmental monitoring, digital voice recorders, or other digital processing systems. ASICs can include entire microprocessors, memory blocks including read only memory (ROM), random access memory (RAM), erasable programmable read only memory (EPROM), electrically erasable programmable read only memory (EEPROM), flash memory and other building blocks and can be known as system-on-chip ("SoC").

To achieve its desired functionality, the computing system 512 can include various hardware and software components. Among these components can be one or more processors 514 and a microseismic events controller 540. These hardware components can be interconnected through the use of a number of electrical connections, busses, and/or network connections. In one embodiment, the processor 514, the chip 505, the chip 521, and the microseismic events controller 540 can be communicatively coupled via a bus 522. The bus 522 can be or include any know computing system bus. The microseismic events controller 540 can be internal to a data storage device 516.

The chip 505, the chip 521, and/or the microseismic events controller 540 can include, either separately or in some combination, software and hardware, including tangible, non-transitory computer readable medium (not shown), for estimating the location for one or more microseismic events within the subterranean formation. The microseismic events controller 540 can be integrated into the chip 505, the chip 521, and/or the processor 514. The chip 505 and/or the chip 521 can be integrated into the processor 514. Although microseismic events controller 540 is depicted as being internal to the data storage device 516, in other examples, the controller module 534 can be a peripheral device (not shown) coupled to the computing system 512 or included within a peripheral device (not shown) coupled to the computing system 512. In other examples, the microseismic events controller 540 can be a peripheral device (not shown) coupled to the computing system 512 or included within a peripheral device (not shown) coupled to the computing system 512.

The microseismic events controller 540 can include instructions that when executed by the microseismic events controller 540 can cause the microseismic events controller 540 to implement at least the functionality of acquiring seismic data with a dense seismic receiver array disposed within the subterranean formation, on the surface above the subterranean formation, or a combination thereof; converting the seismic data into an image domain dataset; detecting within the image domain dataset one or more seismic waveform edges; characterizing within the image domain dataset one or more linear segments, where each of the one or more linear segments define a portion of an edge of the one or more of the seismic waveform edges as a function of seismic arrival time and subterranean depth; and estimating the subterranean depth of the one or more microseismic events based on the one or more linear segments. Further, in some embodiments, the instructions can, when executed by the microseismic events controller 540, cause the microseismic events controller 540 to output a signal indicating whether pressure should be increased or decreased within a well during production operations based on the estimated subterranean depth of the one or more microseismic events. In some embodiments, the microseismic events controller 540 can work in conjunction with the processor 514 to implement the functionality described above. In some embodiments, the microseismic events controller 540 can execute firmware code stored on the computing system 512, such as on the chip 505, the chip 521, and/or the processor 514. The functionality of the computing system 512 and/or the microseismic events controller 540 can be in accordance with the processes of the present specification described herein. In the course of executing code, the processor 514 and/or the microseismic events controller 540 can receive input from and provide output to a number of the remaining hardware units.

The computing system 512 can be implemented in an electronic device. Examples of electronic devices include servers, desktop computers, laptop computers, cloud based computers, personal digital assistants ("PDAs"), mobile devices, smartphones, gaming systems, and tablets, among other electronic devices. The computing system 512 can be utilized in any data processing scenario including, stand-alone hardware, mobile applications, through a computing network, or combinations thereof. Further, the computing system 512 can be used in a computing network, a public cloud network, a private cloud network, a hybrid cloud network, other forms of networks, or combinations thereof. In one example, the methods provided by the computing system 512 are provided as a service by a third party.

To achieve its desired functionality, the computing system 512 can include various other hardware components. Among these other hardware components can be a number of data storage devices or tangible, non-transitory computer readable medium 516, a number of peripheral device adapters 518, and a number of network adapters 520. These hardware components can be interconnected through the use of a number of electrical connections, busses, and/or network connections. In one example, the processor 514, data storage device 516, peripheral device adapters 518, and a network adapter 520 can be communicatively coupled via a bus, for example the bus 522 as depicted in Fig. 7 or via a separate bus, not shown.

The chip 505, the chip 521, and/or the processor 514 can include the hardware and/or firmware/software architecture to retrieve executable code from the data storage device 516 and execute the executable code. The executable code can, when executed by the chip 505, the chip 521, and/or the processor 514, cause the chip 505, the chip 521, and/or the processor 514 to implement at least the functionality of acquiring seismic data with a dense seismic receiver array disposed within the subterranean formation, on the surface above the subterranean formation, or a combination thereof; converting the seismic data into an image domain dataset; detecting within the image domain dataset one or more seismic waveform edges; characterizing within the image domain dataset one or more linear segments, where each of the one or more linear segments define a portion of an edge of the one or more of the seismic waveform edges as a function of seismic arrival time and subterranean depth; and estimating the subterranean depth of the one or more microseismic events based on the one or more linear segments.

The data storage device 516 can store data such as executable program code that is executed by the processor 514, the microseismic events controller 540, or other processing devices. The processor 514 can be a central processing unit that is to execute an operating system in the computing system 512. As will be discussed, the data storage device 516 can specifically store computer code representing a number of applications that the processor 514 and/or the microseismic events controller 540 can execute to implement at least the functionality described herein.

The data storage device 516 can include various types of memory modules, including volatile and nonvolatile memory. In one or more embodiments, the data storage device 516 of the present example can include Random Access Memory ("RAM") 524, Read Only Memory ("ROM") 526, and Hard Disk Drive ("HDD") storage 528. Many other types of memory can also be utilized, and the present specification contemplates the use of many varying type(s) of memory in the data storage device 516 as can suit a particular application of the principles described herein. In certain examples, different types of memory in the data storage device 516 can be used for different data storage requirements. In one or more embodiments, in certain examples the processor 514 can boot from Read Only Memory ("ROM") 526, maintain nonvolatile storage in the Hard Disk Drive ("HDD") memory 528, and execute program code stored in Random Access Memory ("RAM") 524. In examples, the chip 505, and the chip 521 can boot from the Read Only Memory ("ROM") 526.

The data storage device 516 can include a computer readable medium, a computer readable storage medium, or a non-transitory computer readable medium, among others. In one or more embodiments, the data storage device 516 can be, an electronic, magnetic, optical, electromagnetic, infrared, or semiconductor system, apparatus, or device, or any suitable combination of the foregoing. More specific examples of the computer readable storage medium can include, for example, the following: an electrical connection having a number of wires, a portable computer diskette, a hard disk, a RAM, a ROM, an EPROM, a Flash memory, a portable compact disc read only memory ("CD-ROM"), an optical storage device, a magnetic storage device, or any suitable combination of the foregoing. In the context of this document, a computer readable storage medium can be any tangible medium that can contain, or store computer usable program code for use by or in connection with an instruction execution system, apparatus, or device. In another example, a computer readable storage medium can be any non-transitory medium that can contain or store a program for use by or in connection with an instruction execution system, apparatus, or device.

The hardware adapters 518, 520 in the computing system 512 can enable the processor 514 to interface with various other hardware elements, external and internal to the computing system 512. In one or more embodiments, the peripheral device adapters 518 can provide an interface to input/output devices, such as, for example, a display device 530, a mouse, and/or a keyboard. The peripheral device adapters 518 can also provide access to other external devices such as an external storage device, a number of network devices such as, for example, servers, switches, and routers, client devices, other types of computing devices, and combinations thereof.

The display device 530 can be provided to allow a user of the computing system 512 to interact with and implement the functionality of the computing system 512. Examples of display devices 530 can include a computer screen, a laptop screen, a mobile device screen, a personal digital assistant ("PDA") screen, and/or a tablet screen, among other display devices 530.

The peripheral device adapters 518 can also create an interface between the processor 514 and the display device 530, a printer, or other media output devices. The network adapter 520 can provide an interface to other computing devices within, for example, a network, thereby enabling the transmission of data between the computing system 512 and other devices located within the network. The network adapter 520 can provide an interface to an external telecommunications network such as a cellular phone network or other radio frequency enabled network, thereby enabling the transmission of data between the computing system 512 and other external devices such as an external storage device, a number of network devices such as, for example, servers, switches, and routers, client servers, radio frequency enabled devices, other client devices, other types of computing devices, and combinations thereof.

The computing system 512 can further include a number of modules used in the implementation of the systems and methods described herein. The various modules within the computing system 512 can include executable program code that can be executed separately. In this example, the various modules can be stored as separate computer program products. In another example, the various modules within the computing system 512 can be combined within a number of computer program products; each computer program product including a number of the modules.

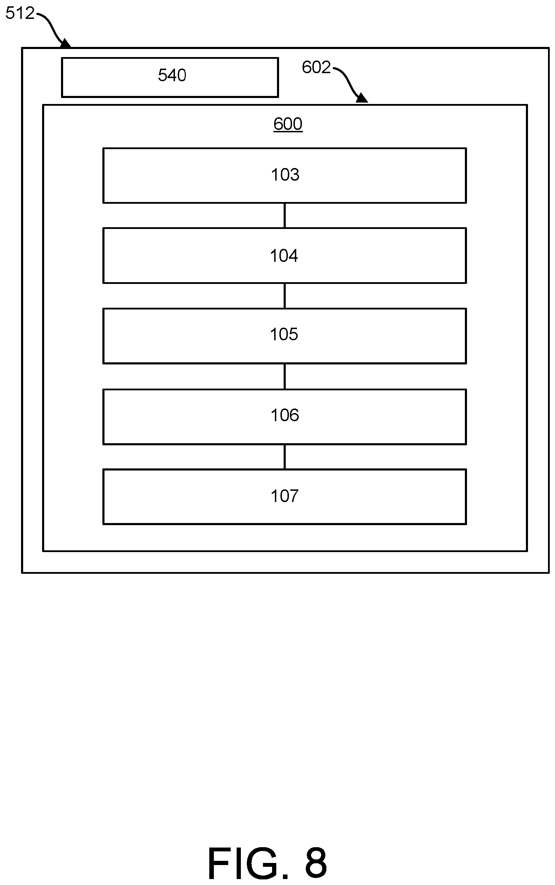

Fig. 8 depicts an illustrative computing device that includes the microseismic events controller 540 and a non-transitory computer-readable medium 602 that includes computer executable instructions 600 stored thereon within the computing system 512 shown in FIG. 7, according to one or more embodiments. Referring to FIG. 1 and FIG. 8, when the computer executable instructions 600 are executed by the microseismic events controller 540, the computer executable instructions 600 causes the microseismic events controller 540 to acquire seismic data with a dense seismic receiver array disposed within the subterranean formation, on the surface above the subterranean formation, or a combination thereof (Block 103); convert the seismic data into an image domain dataset (Block 104); detect within the image domain dataset one or more seismic waveform edges (Block 105); characterize within the image domain dataset one or more linear segments, where each of the one or more linear segments define a portion of an edge of the one or more of the seismic waveform edges as a function of seismic arrival time and subterranean depth (Block 106); and estimate the subterranean depth of the one or more microseismic events based on the one or more linear segments (Block 107). Additionally, in one or more embodiments, when the computer executable instructions 600 are executed by the microseismic events controller 540, the computer executable instructions 600 can cause the microseismic events controller 540 to output a signal indicating whether pressure should be increased or decreased within a well during production operations based on the estimated subterranean depth of the one or more microseismic events.

Certain embodiments and features have been described using a set of numerical upper limits and a set of numerical lower limits. It should be appreciated that ranges including the combination of any two values, *e.g.,* the combination of any lower value with any upper value, the combination of any two lower values, and/or the combination of any two upper values are contemplated unless otherwise indicated. Certain lower limits, upper limits and ranges appear in one or more claims below. All numerical values are "about" or "approximately" the indicated value, and take into account experimental error and variations that would be expected by a person having ordinary skill in the art.

Various terms have been defined above. To the extent a term used in a claim is not defined above, it should be given the broadest definition persons in the pertinent art have given that term as reflected in at least one printed publication or issued patent.

It should be noted and understood that there can be improvements and modifications made of the present invention described in detail above without departing from the scope of the invention as set forth in the accompanying claims.

## Claims

1. A process (100) for estimating a location of one or more microseismic events within a subterranean formation (230), comprising:

   acquiring (103) seismic data from the subterranean formation with a dense seismic receiver array (220);
   converting (104) the seismic data into an image domain dataset;
   detecting (105) within the image domain dataset one or more seismic waveform edges;
   **characterized by**:

   characterizing (106) within the image domain dataset one or more linear segments which each define a portion of the one or more seismic waveform edges, and wherein the linear segments are functions of one or more seismic arrival times and one or more subterranean depths; and
   estimating (107) the subterranean depth of the one or more microseismic events within a subterranean formation based on the one or more linear segments.

2. The process of claim 1, wherein detecting within the image domain dataset one or more seismic waveform edges comprises:
   performing a Hough transform within the image domain dataset to detect the one or more seismic arrival times of the edge of the one or more seismic waveform edges at one or more subterranean depths.

3. The process of claim 2, wherein the Hough transform is performed to determine non-seismic features within the image domain dataset and to trim the non-seismic features from the image domain dataset.

4. The process of claim 1, wherein estimating the subterranean depth of the one or more microseismic events comprises determining a slope of the one or more seismic waveform edges within the image domain dataset.

5. The process of claim 1, wherein the dense seismic receiver array (220) is at least partially disposed within the subterranean formation (230).

6. The process of claim 5, wherein at least a portion of the dense seismic receiver array (220) is disposed within a wellbore (225) of a monitoring well or a well drilled to produce hydrocarbons.

7. The process of claim 1, further comprising increasing or decreasing a pressure within a well during production operations based on the estimated subterranean depth of the one or more microseismic events.

8. A system comprising:

a dense seismic receiver array (220) configured to acquire seismic data from a subterranean formation; and

at least one processor (514) configured to execute an executable code to implement at least the functionality of estimating a subterranean depth of one or more microseismic events within a subterranean formation (230), comprising:

converting (104) seismic data from the dense seismic receiver array (220) into an image domain dataset;

detecting (105) within the image domain dataset one or more seismic waveform edges;

**characterized by**:

characterizing (106) within the image domain dataset one or more linear segments which each define a portion of the one or more seismic waveform edges, and wherein the linear segments are functions of one or more seismic arrival times and one or more subterranean depths; and

estimating (107) the subterranean depth of the one or more microseismic events within a subterranean formation (230) based on the one or more linear segments.

**9.** The system of claim 8, wherein the at least one processor (514) is further configured to execute code to perform a Hough transform within the image domain dataset to detect the one or more seismic arrival times of the edge of the one or more seismic waveform edges at one or more subterranean depths.

**10.** The system of claim 9, wherein the Hough transform is utilized to determine non-seismic features within the image domain dataset and to trim the non-seismic features from the image domain dataset.

**11.** The system of claim 8, wherein estimating the subterranean depth of the one or more microseismic events comprises executing the executable code to implement at least the functionality of determining a slope of the one or more seismic waveform edges within the image domain dataset.

**12.** The system of claim 8, wherein the dense seismic receiver array (220) is disposed within the subterranean formation (230).

**13.** The system of claim 12, wherein at least a portion of the dense seismic receiver array (220) is disposed within a wellbore (225) of a monitoring well or a well drilled to produce hydrocarbons.

**14.** The system of claim 8, wherein the at least one processor (514) is configured to output a signal indicating whether pressure should be increased or decreased within a well during production operations based on the estimated subterranean depth of the one or more microseismic events.

**15.** The system of claim 8, wherein the dense seismic receiver array (220) is an optical fiber.

**Patentansprüche**

**1.** Prozess (100) zum Abschätzen eines Ortes von einem oder mehreren mikroseismischen Ereignissen innerhalb einer unterirdischen Formation (230), umfassend:

Erfassen (103) von seismischen Daten aus der unterirdischen Formation mit einem dichten seismischen Empfangsarray (220);

Konvertieren (104) der seismischen Daten in einen Bilddomänendatensatz;

Erkennen (105) einer oder mehrerer seismischer Wellenformkanten innerhalb des Bilddomänendatensatzes; **gekennzeichnet durch:**

Charakterisieren (106) eines oder mehrerer linearer Segmente innerhalb des Bilddomänendatensatzes, die jeweils einen Abschnitt der einen oder mehreren seismischen Wellenformkanten definieren, wobei die linearen Segmente Funktionen von einer oder mehreren seismischen Ankunftszeiten und einer oder mehreren unterirdischen Tiefen sind; und

Schätzen (107) der unterirdischen Tiefe des einen oder der mehreren mikroseismischen Ereignisse innerhalb einer unterirdischen Formation basierend auf dem einen oder den mehreren linearen Segmenten.

**2.** Prozess nach Anspruch 1, wobei das Erkennen einer oder mehrerer seismischer Wellenformkanten in dem Bilddomänendatensatz Folgendes umfasst: Durchführen einer Hough-Transformation innerhalb des Bilddomänendatensatzes, um die eine oder mehreren seismischen Ankunftszeiten des Randes der einen oder mehreren seismischen Wellenformkanten in einer oder mehreren unterirdischen Tiefen zu erkennen.

**3.** Prozess nach Anspruch 2, wobei die Hough-Transformation durchgeführt wird, um nicht-seismische Merkmale innerhalb des Bilddomänendatensatzes zu bestimmen und um die nicht-seismischen Merkmale aus dem Bilddomänendatensatz zu blenden.

4. Prozess nach Anspruch 1, wobei das Schätzen der unterirdischen Tiefe des einen oder der mehreren mikroseismischen Ereignisse das Bestimmen einer Neigung der einen oder der mehreren seismischen Wellenformkanten innerhalb des Bilddomänendatensatzes umfasst.

5. Prozess nach Anspruch 1, wobei das dichte seismische Empfängerarray (220) mindestens teilweise innerhalb der unterirdischen Formation (230) angeordnet ist.

6. Prozess nach Anspruch 5, wobei mindestens ein Abschnitt des dichten seismischen Empfangsarrays (220) innerhalb eines Brunnenbohrlochs (225) eines Überwachungsbrunnens oder eines zur Förderung von Kohlenwasserstoffen gebohrten Brunnens angeordnet ist.

7. Prozess nach Anspruch 1, ferner umfassend das Erhöhen oder Verringern eines Drucks innerhalb eines Brunnens während des Förderbetriebs basierend auf der geschätzten unterirdischen Tiefe des einen oder der mehreren mikroseismischen Ereignisse.

8. System, umfassend:

ein dichtes seismisches Empfangsarray (220), das konfiguriert ist, um seismische Daten von einer unterirdischen Formation zu empfangen; und

mindestens einen Prozessor (514), der konfiguriert ist, um einen ausführbaren Code auszuführen, um mindestens die Funktionalität der Abschätzung einer unterirdischen Tiefe von einem oder mehreren mikroseismischen Ereignissen innerhalb einer unterirdischen Formation (230) zu implementieren, umfassend:

Konvertieren (104) von seismischen Daten aus dem dichten seismischen Empfangsarray (220) in einen Bilddomänendatensatz;

Erkennen (105) einer oder mehrerer seismischer Wellenformkanten innerhalb des Bilddomänendatensatzes; **gekennzeichnet durch:**

Charakterisieren (106) eines oder mehrerer linearer Segmente innerhalb des Bilddomänendatensatzes, die jeweils einen Abschnitt der einen oder mehreren seismischen Wellenformkanten definieren, wobei die linearen Segmente Funktionen von einer oder mehreren seismischen Ankunftszeiten und einer oder mehreren unterirdischen Tiefen sind; und

Schätzen (107) der unterirdischen Tiefe des einen oder der mehreren mikroseismischen Ereignisse innerhalb einer unterirdischen Formation (230) basierend auf dem einen oder den mehreren linearen Segmenten.

9. System nach Anspruch 8, wobei der mindestens eine Prozessor (514) ferner konfiguriert ist, um einen Code zur Durchführung einer Hough-Transformation innerhalb des Bilddomänendatensatzes auszuführen, um die eine oder mehreren seismischen Ankunftszeiten der Kante der einen oder mehreren seismischen Wellenformkanten in einer oder mehreren unterirdischen Tiefen zu erkennen.

10. System nach Anspruch 9, wobei die Hough-Transformation verwendet wird, um nicht-seismische Merkmale innerhalb des Bilddomänendatensatzes zu bestimmen und um die nicht-seismischen Merkmale aus dem Bilddomänendatensatz zu entfernen.

11. System nach Anspruch 8, wobei das Schätzen der unterirdischen Tiefe des einen oder der mehreren mikroseismischen Ereignisse das Ausführen des ausführbaren Codes umfasst, um mindestens die Funktionalität des Bestimmens einer Neigung der einen oder der mehreren seismischen Wellenformkanten innerhalb des Bilddomänendatensatzes zu implementieren.

12. System nach Anspruch 8, wobei das dichte seismische Empfangsarray (220) innerhalb der unterirdischen Formation (230) angeordnet ist.

13. System nach Anspruch 12, wobei mindestens ein Abschnitt des dichten seismischen Empfangsarrays (220) innerhalb eines Brunnenbohrlochs (225) eines Überwachungsbrunnens oder eines zur Förderung von Kohlenwasserstoffen gebohrten Brunnens angeordnet ist.

14. System nach Anspruch 8, wobei der mindestens eine Prozessor (514) konfiguriert ist, um ein Signal auszugeben, das angibt, ob der Druck in einem Brunnen während des Förderbetriebs basierend auf der geschätzten unterirdischen Tiefe des einen oder der mehreren mikroseismischen Ereignisse erhöht oder verringert werden sollte.

15. System nach Anspruch 8, wobei das dichte seismische Empfangsarray (220) eine optische Faser ist.

**Revendications**

1. Procédé (100) destiné à estimer un emplacement d'un ou plusieurs événements microsismiques à l'intérieur d'une formation souterraine (230), comprenant :

   l'acquisition (103) de données sismiques à partir de la formation souterraine avec un réseau de récepteurs sismiques denses (220) ;
   la conversion (104) des données sismiques en un ensemble de données de domaine d'image ;
   la détection (105), au sein de l'ensemble de données de domaine d'image, d'un ou plusieurs bords de forme d'onde sismique ;
   **caractérisé par** :

   la caractérisation (106), au sein de l'ensemble de données de domaine d'image, d'un ou plusieurs segments linéaires qui définissent chacun une partie du ou des bords de forme d'onde sismique, et dans lequel les segments linéaires sont fonction d'un ou plusieurs temps d'arrivée sismiques et d'une ou plusieurs profondeurs souterraines ; et
   l'estimation (107) de la profondeur souterraine du ou des événements microsismiques à l'intérieur d'une formation souterraine sur la base du ou des segments linéaires.

2. Procédé selon la revendication 1, dans lequel la détection, au sein de l'ensemble de données de domaine d'image, d'un ou plusieurs bords de forme d'onde sismique comprend :
   la réalisation d'une transformée de Hough au sein de l'ensemble de données de domaine d'image afin de détecter le ou les temps d'arrivée sismiques du bord du ou des bords de forme d'onde sismique à une ou plusieurs profondeurs souterraines.

3. Procédé selon la revendication 2, dans lequel la transformée de Hough est effectuée afin de déterminer des caractéristiques non sismiques au sein de l'ensemble de données de domaine d'image et de rogner les caractéristiques non sismiques de l'ensemble de données de domaine d'image.

4. Procédé selon la revendication 1, dans lequel l'estimation de la profondeur souterraine du ou des événements microsismiques comprend la détermination d'une pente du ou des bords de forme d'onde sismique au sein de l'ensemble de données de domaine d'image.

5. Procédé selon la revendication 1, dans lequel le réseau de récepteurs sismiques denses (220) est au moins partiellement disposé à l'intérieur de la formation souterraine (230).

6. Procédé selon la revendication 5, dans lequel au moins une partie du réseau de récepteurs sismiques denses (220) est disposée à l'intérieur d'un puits de forage (225) d'un puits de surveillance ou d'un puits foré pour produire des hydrocarbures.

7. Procédé selon la revendication 1, comprenant en outre l'augmentation ou la diminution d'une pression à l'intérieur d'un puits pendant des opérations de production sur la base de la profondeur souterraine estimée du ou des événements microsismiques.

8. Système comprenant :

   un réseau de récepteurs sismiques denses (220) configuré pour acquérir des données sismiques à partir d'une formation souterraine ; et
   au moins un processeur (514) configuré pour exécuter un code exécutable pour mettre en œuvre au moins la fonctionnalité d'estimation d'une profondeur souterraine d'un ou plusieurs événements microsismiques à l'intérieur d'une formation souterraine (230), comprenant :

   la conversion (104) de données sismiques à partir du réseau de récepteurs sismiques denses (220) en un ensemble de données de domaine d'image ;
   la détection (105), au sein de l'ensemble de données de domaine d'image, d'un ou plusieurs bords de forme d'onde sismique ;
   **caractérisé par** :

   la caractérisation (106), au sein de l'ensemble de données de domaine d'image, d'un ou plusieurs segments linéaires qui définissent chacun une partie du ou des bords de forme d'onde sismique, et dans lequel les segments linéaires sont fonction d'un ou plusieurs temps d'arrivée sismiques et d'une ou plusieurs profondeurs souterraines ; et
   l'estimation (107) de la profondeur souterraine du ou des événements microsismiques à l'intérieur d'une formation souterraine (230) sur la base du ou des segments linéaires.

9. Système selon la revendication 8, dans lequel l'au moins un processeur (514) est en outre configuré pour effectuer une transformée de Hough au sein de l'ensemble de données de domaine d'image afin de détecter le ou les temps d'arrivée sismiques du bord du ou des bords de forme d'onde sismique à une ou plusieurs profondeurs souterraines.

**10.** Système selon la revendication 9, dans lequel la transformée de Hough est utilisée pour déterminer des caractéristiques non sismiques au sein de l'ensemble de données de domaine d'image et pour rogner les caractéristiques non sismiques de l'ensemble de données de domaine d'image.

**11.** Système selon la revendication 8, dans lequel l'estimation de la profondeur souterraine du ou des événements microsismiques comprend l'exécution du code exécutable afin de mettre en œuvre au moins la fonctionnalité de détermination d'une pente du ou des bords de forme d'onde sismique au sein de l'ensemble de données de domaine d'image.

**12.** Système selon la revendication 8, dans lequel le réseau de récepteurs sismiques denses (220) est disposé à l'intérieur de la formation souterraine (230).

**13.** Système selon la revendication 12, dans lequel au moins une partie du réseau de récepteurs sismiques denses (220) est disposée à l'intérieur d'un puits de forage (225) d'un puits de surveillance ou d'un puits foré pour produire des hydrocarbures.

**14.** Système selon la revendication 8, dans lequel l'au moins un processeur (514) est configuré pour délivrer en sortie un signal indiquant du fait qu'une pression doit être augmentée ou diminuée à l'intérieur d'un puits pendant des opérations de production sur la base de la profondeur souterraine estimée du ou des événements microsismiques.

**15.** Système selon la revendication 8, dans lequel le réseau de récepteurs sismiques denses (220) est une fibre optique.

100

| 103 |
|-----|

| 104 |
|-----|

| 105 |
|-----|

| 106 |
|-----|

| 107 |
|-----|

# FIG. 1

FIG. 2

FIG. 3

EP 4 430 435 B1

FIG. 4

**FIG. 5**

**FIG. 6**

512

522

514

518

520

521

505

516

524

540

526

528

530

# FIG. 7

512

540

602

600

103

104

105

106

107

# FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63278383

- CN 112462419 A